# EUROPÄISCHE PATENTSCHRIFT

(11) **EP 0 486 466 B1**
(45) Veröffentlichungstag und Bekanntmachung des Hinweises auf die Patenterteilung: **12.04.1995**
(21) Anmeldenummer: 91890279.2
(22) Anmeldetag: 14.11.1991
(51) Int. Cl.: C05F 17/00

(54) **Verfahren zum kontrollierten und gesteuerten aeroben biologischen Abbau von organischen Abfällen**
Method for controlling the aerobic decomposition of organic wastes
Méthode de contrôle de la décomposition aérobique des matériaux organiques de déchet

(30) Priorität: 16.11.1990 AT 2327/90
(43) Veröffentlichungstag der Anmeldung: 20.05.1992
(73) Patentinhaber: VOEST-ALPINE MONTAGE GESELLSCHAFT M.B.H., A-4600 Wels Oberösterreich (AT)
(72) Erfinder: Zobernig, Andreas, Dipl.-Ing., A-4060 Leonding (AT); Höchtel, Franz, Ing., A-4600 Wels (AT); Hochmayr, Franz, A-4600 Wels (AT)
(74) Vertreter: Itze, Peter, Dipl.-Ing.

(56) Entgegenhaltungen:
- EP-A- 0 221 219
- US-A- 3 138 448
- US-A- 4 384 878
- WORLD PATENTS INDEX LATEST Week 9050, Derwent Publications Ltd., London, GB; AN 90-372094 & JP-A-2268 896 (NIPPON STEEL CORPORATION)

## Beschreibung

Die Erfindung bezieht sich auf ein Verfahren zum kontrollierten und gesteuerten aeroben biologischen Abbau von organischen Abfällen, wobei das abzubauende Substrat, welches gegebenenfalls mit einer Mischung aus Bakterien und Pilzen beimpft wird, oben auf das bereits in mikrobiologischem Abbau befindliche Gut aufgegeben und das umgewandelte Gut unten abgezogen wird und wobei für den Abbau ein sauerstoffhältiges Gas zugeführt wird.

Bei einem bekannten Verfahren dieser Art wird Frischluft, welcher CO₂-hältige Abluft beigemischt wird, von unten her durch die Rotte geblasen. Dabei wird der Frischluft- und/oder Abluftdurchsatz in Abhängigkeit von dem CO₂-Gehalt der Abluft des Rottebehälters gesteuert. Mit einem solchen Verfahren ist allerdings der Abbau von stickstoffhältigen organischen Abfällen nicht gezielt steuerbar, da durch die Messung des CO₂-Gehaltes der Abluft lediglich Parameter abgenommen werden, welche vom Abbau der kohlenhydrathältigen Anteile des verrotteten Gutes herrühren.

Weiters ist es bereits bekannt, Stickstoff aus Abwässer durch gesteuerte intermittierende Belüftung zu entfernen, wobei bei diesem bekannten Verfahren eine gesteuerte Zersetzung der organischen Substanzen sowie eine Nitrifikation bzw. Denitherung der anorgansichen Substanzen erfolgt.

Der vorliegenden Erfindung liegt die Aufgabe zugrunde, ein Verfahren der eingangs genannten Art zu schaffen, mit welchem gezielt der Abbau der stickstoffhältigen Verbindungen steuerbar ist.

Erfindungsgemäß wird diese Aufgabe dadurch gelöst, daß in Abhängigkeit vom NH₃-Gehalt der Abluft und/oder vom NH₃-Gehalt, welcher über Meßsonden in dem im Abbau befindlichen Substratinneren gemessen wird, und in Abhängigkeit vom pH-Wert dieses Substrates dem sauerstoffhältigen Gas CO₂ zugesetzt wird, wobei bei solchen organischen Abfällen, die keinen oder nur wenig Stickstoff enthalten, diese vor oder während ihrer Aufgabe auf das in Abbau befindliche Gut mit organischen und/oder anorganischen Stickstoffverbindungen bzw. solche enthaltende Abfälle vermengt werden. Es wird damit das direkte Stoffwechselprodukt der Stickstoffverbindungen abbauenden Mikroorganismen und auch eine entsprechende Folgewirkung des Abbaues zur Regelung herangezogen, nämlich der abgesenkte pH-Wert. Es kann damit eine sehr genaue Regelung erfolgen, wodurch immer die für den Abbau der Verbindungen optimalen Bedingungen eingehalten werden können.

Dabei kann bei Ansteigen des NH₃-Gehaltes in der Abluft und/oder in dem im Abbau befindlichen Substrat der Anteil an CO₂ im zugeführten Gas erhöht werden. Durch diese CO₂-Zugabe verschiebt sich nämlich das Gleichgewicht von NH₃ zu NH₄ und damit verringert sich die Desorption von NH₃ und seine toxische Wirkung, wodurch zugleich der Stickstoffverlust verringert wird, was nämlich bewirken könnte, daß ein Stickstoffmangel im Substrat auftritt, was wiederum eine Verlängerung des eigentlichen Abbaues ergeben würde. Außerdem kommt es durch die CO₂-Zugabe zu einer Absenkung des pH-Wertes im verrotteten Substrat, was dann wieder eine Aktivierung der Mikroorganismen zur Folge hat. Weiters kann die Menge an aufzubringendem Frischsubstrat und der Aufgabezeitpunkt abhängig vom NH₃-Wert der Abluft gesteuert werden, wodurch eine Absenkung des NH₃-Gehaltes der Abluft dadurch erreicht wird, daß bei Herabsetzung der Zugabemenge des Frischsubstrates die relative Konzentration von CO₂ in dem abzubauenden Substrat ansteigt. Um bereits in dem frisch aufzugebenden Substrat eine Vorkonditionierung zu erzielen, kann dem Frischsubstrat bereits vor der Aufgabe auf das in Abbau befindliche Gut CO₂ und/oder ein CO₂-hältiges Medium zugesetzt werden. Damit die Mikroorganismen immer optimale Verhältnisse für ihre Tätigkeit vorfinden, können dem abzubauenden Substrat vor oder während seiner Aufgabe auf das in Abbau befindliche Gut zusätzliche Nährstoffe für die Mikroorganismen zugesetzt werden. Dabei können als Nährstoffe N, P, K, Mg, Ca und Si zugesetzt werden, und zwar vorzugsweise N 0,5 %, P 1,0 %, K 2,5 %, Mg 3 %, Ca 6 %, Si 43 %, wobei zusätzlich noch organisches Material (Knochenmehl 9 %) und inertes Trägermaterial 35 % der Nährstoffmischung zugesetzt werden. Weiters können dem abzubauenden Substrat vor oder während seiner Aufgabe auf das in Abbau befindliche Gut den Abbau katalytisch unterstützenden Substanzen zugesetzt werden, was ebenfalls zu einer Vergleichmäßigung und Beschleunigung des Abbaues führt. Dabei kann die katalytisch wirkende Substanz aus SiO₂, Al₂O₃, Fe₂O₃, K₂O, CaO, Na₂O, MgO und Spurenelementen zusammengesetzt sein, und zwar vorzugsweise SiO₂ 50 %, Al₂O₃ 15 %, Fe₂O₃ 10 %, K₂O 3 %, CaO 5 %, Na₂O 5 % und MgO 4,5 %, wobei der Rest durch Spurenelemente ergänzt wird. Zur Erzielung einer optimalen Abbaugeschwindigkeit kann die Temperatur des in Abbau befindlichen Gutes auf etwa 36 bis 40° C, maximal jedoch bis etwa 60° C, gehalten werden, wodurch die Mikroorganismen in ihrem Temperaturoptimum arbeiten können. Dabei kann die Temperatur in im Abbau befindlichen Gut mittels des eingebrachten Gases in den vorgegebenen Grenzen gehalten werden. Es kann also durch die Eingabe des CO₂ enthaltenden Gases auch die Temperatur des Substrates gesteuert werden.

Vorteilhafterweise kann die Zugabe von frischem Substrat unabhängig von der Entnahme von abgebautem Substrat erfolgen. Dies deshalb, weil das Einsatzmaterial in seiner Zusammensetzung Schwankungen unterworfen ist und daher die für einen optimalen Abbau erforderliche Zeitspanne nicht gleich lang ist. Wenn jedoch das verrottete Endprodukt annähernd gleichen Qualitätsstandard haben soll, muß die Verweildauer sowie die Menge des Austraggutes den jeweiligen Bedingungen angepaßt werden, was zu Schwankungen in der auszutragenden Menge führt. Die Menge des Austrages wird allerdings immer nur einen Bruchteil des Gesamtinhaltes des Reaktors betragen. Dieser Inhalt des Reaktors wandert langsam, je nach Verrottungsgrad, durch den Rottebehälter durch und wird dabei entsprechend zu einem humusartigen Produkt umgewandelt. Um jeweils zum richtigen Zeitpunkt das verrottete Gut auszutragen, kann die Abzugsmenge an abgebautem Gut in Abhängigkeit vom pH-Wert gesteuert werden. Der pH-Wert des frisch aufgegebenen Gutes kann dabei auf einem Wert unter pH 13 gehalten. Der pH-Wert des Austragsgutes kann zwischen pH 7 und 8,5 liegen. Sobald also der angeführte pH-Wert des Austragsgutes erreicht wird, wird jene Menge an verrottetem Gut ausgetragen, die einen in den genannten Grenzen liegenden pH-Wert aufweist. Sobald Gut mit höherem pH-Wert zum Austragsort kommt, wird der Austrag von verrottetem Gut wieder gestoppt. Zusätzlich zur Regelung des Abzuges über den pH-Wert kann auch noch die Temperatur und/oder die NH₃-Konzentration zur Ermittlung des richtigen Austragezeitpunktes herangezogen werden, desgleichen auch eine visuelle Betrachtung des am Boden des Rottebehälters ankommenden Gutes. Innerhalb des Reaktors wird die Temperaturverteilung über den gesamten Reaktorinhalt gemessen, und zwar über entsprechend angeordnete Temperaturmeßfühler. Damit ist eine genaue Überwachungsmöglichkeit des Abbauverlaufes gegeben.

Das sauerstoffhältige Gas kann dabei im Gleichstrom oder im Gegenstrom zum abzubauenden Gut geführt werden. Dies hängt dann von der jeweiligen Art der Rotteführung ab. Wenn an bestimmten Stellen des abzubauenden Gutes mehr sauerstoffhältiges Gas benötigt wird, kann das sauerstoffhältige Gas bei Bedarf zusätzlich über Lanzen direkt in das abzubauende Gut eingetragen werden. Damit wird vermieden, daß sich innerhalb des Gutes Inseln bilden, in welchen das abzubauende Gut zusammengeklumpt ist und damit einen Gasdurchsatz verhindert. Überdies wird damit erreicht, daß auch der CO₂-Gehalt in allen Bereichen des Reaktors dem jeweiligen Abbau gerade entsprechend einstellbar ist. Diesbezüglich kann auch der CO₂-Gehalt nicht nur in der Abluft, sondern auch an wenigstens einer Stelle des im Abbau befindlichen Gutes gemessen werden. Die Zufuhr des sauerstoffhältigen Gases kann dabei kontinuierlich oder absatzweise erfolgen. Die Abluft kann dabei zwecks Ausnützung des in der Abluft enthaltenen CO₂ und gegebenenfalls zum weiteren Abbau den NH₃ rezirkuliert werden. Die Abluft kann dabei vor ihrer Wiedereinleitung bei zu hohem NH₃-Gehalt ganz oder teilweise durch einen NH₃-Filter, z.B. eine Aufschlämmung von Bentonitmehl, geleitet werden, womit vermieden wird, daß im Rottegut und in der Abluft zu hohe NH₃-Werte enthalten sind, was einerseits unter Umständen zu einer Inhibierung des Mikroorganismenwachstums und anderseits auch zu einer Belastung der Abluft führt. Gegebenenfalls könnte das Bentonitmehl dem abzubauenden Gut auch direkt zugesetzt werden. Weiters können die die Stickstoffverbindungen enthaltenden organischen Abfälle auch mit anderen organischen Abfällen, welche keine Stickstoffverbindungen enthalten, wie z.B. Altpapier, Stroh u.dgl., in Mischung eingesetzt werden, womit auch andere organische Abfälle, die als solche nicht so leicht verrotten, einem zügigen mikrobiologischen Abbau unterworfen werden können. Schließlich können schwer entwässerbare Schlämme, z.B. Schlämme aus der Nahrungsmittelindustrie vor dem Abpressen zusätzlich mit Ca/OH)₂ vermengt werden, wodurch auch derartige Schlämme problemlos in dem erfindungsgemäßen Verfahren verarbeitet werden können.

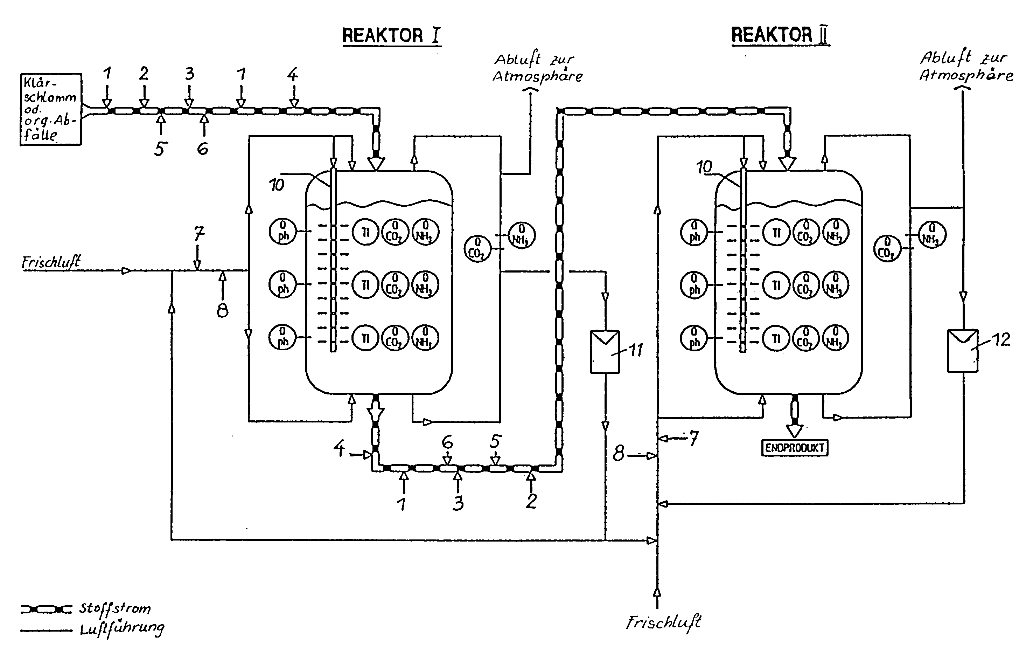

Das erfindungsgemäße Verfahren wird nachstehend anhand der beiliegenden Zeichnung, welche das Fließschema einer 2-Reaktor-Anlage wiedergibt, näher beschrieben, wobei die mit Pfeilen angedeuteten Zugabestellen die folgende Bedeutung haben:
1 C-Träger
2 Futtermittel
3 Enzymlösung
4 Bentonit oder Bentonitlösung
5 Katalysator
6 H₂O
7 Befeuchtungswasser
8 CO₂
Mit 10 sind Belüftunglanzen in den Reaktoren I und II bezeichnet und mit 11, 12 NH₃-Filter, welchen als Aufschlämmittel Bentonitlösung zugesetzt werden kann.

Die dargestellte 2-Reaktor-Anlage besteht, wie schon der Name sagt, aus zwei hintereinandergeschalteten Rottereaktoren, wobei das abzubauende Gut zuerst Reaktor I und dann Reaktor II durchläuft. In beiden Reaktoren wird das Gut entsprechend mit CO₂-hältigem Gas begast, wobei das Gas entweder im Kreis geführt oder direkt durch mit CO₂ versetzter Frischluft gebildet ist. Das Ausgangsprodukt wird vor der Einbringung in den ersten Reaktor mit einer Nährstofflösung für die Mikroorganismen versetzt und weiters auch noch mit einer den Abbauprozeß katalytisch unterstützenden Mischung versehen. Falls mit den Aminoverbindungen enthaltenden Abfällen auch solche Abfälle behandelt werden sollen, welche keine Aminoverbindungen enthalten, dann erfolgt die Mischung der Produkte ebenfalls vor der Aufgabe auf den Reaktor I, um möglichst gleichförmige Mischungen zu erzielen. Weiters wird dabei ein optimales C/N-Verhältnis eingestellt. Falls zu erwarten ist, daß hohe NH₃-Mengen auftreten, dann kann dem Einsatzgut von vornherein bereits Bentonitmehl zugesetzt werden, welches NH₃ adsorbieren kann. In vorliegendem Ausführungsbeispiel ist die Nährstofflösung mit "Futtermittel" bezeichnet und die katalytisch wirksamen Substanzen mit "Katalysator". Weiters wird dem Ausgangsmaterial auch eine mit "Enzymlösung" bezeichnete Mischung aus Bakterien und Pilzen zugesetzt, wobei die Actinomyceten einen wesentlichen Bestandteil dieser Mischung bilden. Das auf das bereits im Abbau befindliche Material aufzugebende frische Material wird auf einen Feuchtigkeitsgehalt eingestellt, bei welchem der Trockensubstanzgehalt etwa 35 bis 40 % beträgt. Ist das Produkt zu trocken, dann wird zusätzlich das Produkt angefeuchtet, ist es jedoch zu feucht, dann kann das Gemenge mittels Kammerfilterpressen od.dgl. auf den gewünschten Trockensubstanzgehalt eingestellt werden. Die Menge des aufgegebenen Gutes wird dabei so gewählt, daß die am Boden des Reaktors abgezogene verrottete Menge ersetzt wird. Da, wie schon angeführt, die abgezogene Menge nicht konstant ist, sondern in Abhängigkeit vom Abbaugrad und von der Abbaugeschwindigkeit schwankt, wird auch die aufgegebene Menge des abzubauenden Gutes entsprechend schwanken. Das am Boden des ersten Reaktors abgezogene verrottete Gut wird dann dem zweiten Reaktor zugeführt, wobei je nach Zusammensetzung des Gutes und Abbaugrad dem abgezogenen Gut abermals Kohlenstoffträger, eine sogenannte "Enzymlösung", eine katalytisch wirkende Substanz und ein Nährmittel zugesetzt werden können.

Neben dem Kohlenstoffträger, also dem organischen Material, welches keine Aminoverbindungen enthält, von welchen insgesamt maximal 20 % zugesetzt werden, werden eben noch die Nährmittel in einer Menge von etwa 1 bis 5 % des Gesamtgutes und die katalytisch wirkende Substanz ebenfalls in einer Menge von 1 bis 5 % zugesetzt. Die für den mikrobiologischen Abbau des Substrates eingesetzte Mischung aus Bakterien und Pilzen kann dabei entweder in Form einer Neubeimpfung des gesamten Gutes, oder aber durch Teilrückführung eines Teiles des Endproduktes des zweiten Reaktors dem abzubauenden Gut zugesetzt werden. Weiters kann das auf den ersten Reaktor aufzugebende Gut noch mit FeCl₃ und/oder Kalk konditioniert werden.

Von der Mantelfläche der Reaktoren her können in das Innere des Behälters Meßfühler zur Ermittlung des CO₂-Gehaltes, des NH₃-Gehaltes, der Temperatur, des pH u.dgl. hineinragen. Das sauerstoffhältige Gas, welches mit CO₂ versetzt wird, ist im vorliegenden Fall Frischluft, könnte jedoch auch eine andere, speziell auf das abzubauende Gut abgestellte Gasmischung sein. Dieses Gas wird gemäß vorliegender Ausführungsvariante entweder von unten oder von oben, oder aber mittels in das Gut ragender Belüftungslanzen in das in Abbau befindliche Gut eingebracht, wobei die CO₂-Gabe zum eingebrachten Gas spätestens dann beginnt, wenn eine NH₃-Konzentration im Abgas von 200 ppm vorliegt. Die Konzentration von CO₂ in der Zuluft liegt dabei maximal bei etwa 2,5 bis 3 Vol.-%, wobei die CO₂-Zugabe speziell beim Anfahren des Reaktors von großer Wichtigkeit ist, da es dann zu einer rapiden Zunahme der NH₃-Konzentration in der Abluft kommt, was durch die CO₂-Zugabe vermieden werden kann. Durch die CO₂-Zugabe wird auch ein zügigeres Anspringen der Abbaureaktion erreicht. Nach dem Anspringen der Reaktion wird die CO₂-Zugabe je nach NH₃-Konzentration der Abluft gedrosselt. Fallweise könnte sie sogar ganz eingestellt werden, und zwar dann, wenn aufgrund einer hohen Zugabe von kohlenstoffhältigen Verbindungen eine so große Menge an CO₂ bei der Abbaureaktion entsteht, daß die gewünschte Konzentration von CO₂ im Abgas, also etwa 14 % CO₂ im Abgas, überschritten wird. Die Zuluft für den zweiten Reaktor kann dabei teilweise aus der Abluft des ersten Reaktors und/oder teilweise aus der Abluft des zweiten Reaktors und teilweise aus Frischluft bestehen. Dabei ist jedoch zu beachten, daß der NH₃-Wert innerhalb der Luft nicht zu groß wird, in welchem Falle dann die Abluft aus den Reaktoren über spezielle NH₃-Filter, welche vorliegend mit einer Bentonit-Aufschlämmung (in der Zeichnung als Bentonitlösung bezeichnet) befüllt sind. Im Falle des Einleitens der Abluft des ersten Reaktors in den zweiten Reaktor sind Ammoniakkonzentrationen in der Abluft aus dem ersten Reaktor bis zu 100 ppm zulässig. Bei höheren Konzentrationen, insbesondere ab 600 ppm, kann die Reaktorabluft nicht mehr als Zuluft verwendet werden, es sei denn, wenn - wie schon angeführt - ein NH₃-Filter zwischengeschaltet ist. Bei einem versuchsweise als Batch-Verfahren geführten Verfahren wurden in den ersten Reaktor 43,25 kg Klärschlamm, 7,30 kg Sägemehl als Kohlenstoffträger, 1,25 kg Nährlösung für die Mikroorganismen, 1,25 kg der den katalytischen Abbau fördernden Substanz, 0,11 einer Mikroorganismen-Aulschlämmung und 0,11 Wasser eingesetzt. Diese Mischung wurde in einen Versuchsreaktor mit 200 l Inhalt gut vermischt eingebracht. Der Reaktor wurde mit einer definierten Luftmenge durchlüftet, wobei für den Start und für die Steuerung des Reaktors entsprechend dem NH₃-Gehalt der Abluft CO₂ zugeführt wurde. Weiters wurde die Luftmenge so gesteuert, daß die Reaktionstemperatur innerhalb des Reaktors auf 36 bis 40° C, maximal bei 59° C, gehalten wurde. Der CO₂-Gehalt in der Abluft war schwankend und stieg auf maximal 16 Vol.-%. Der Ammoniakanteil der Abluft schwankte ebenfalls und stieg bis 1.000 ppm an. Die Zuluft wurde auf 90 % relative Luftfeuchtigkeit angefeuchtet. Für das Anlaufen der Abbaureaktion wurde der Reaktor auf eine Temperatur von etwa 35° C angeheizt. Der pH-Wert des Substrates betrug am ersten Tag der Abbaureaktion 11,5, am dritten Tag etwa 9,9, am siebten Tag 7,6, und bei einem pH-Wert von 8,45 wurde das Substrat aus dem Reaktor ausgetragen. Das gesamte ausgetragene Substrat zeigte eine homogene sichtbare Verpilzung ohne Ammoniakgeruch. Der Getuch des abgebauten Produktes war pilzartig, nach Walderde. Dieses aus dem Reaktor I entnommene Substrat wurde in den zweiten Reaktor übergeführt, wobei 31 kg Substrat mit 5,8 kg Sägemehl, 0,625 kg Nährstoffen, 0,625 kg der katalytisch wirkenden Substanz, 0,11 der Mikroorganismen-Aufschlämmung und 0,11 Wasser versehen wurden. Auch dieses Material wurde entsprechend vermischt in einen 200 l Reaktor eingebracht. Dieser Reaktor wurde wieder mit einer definierten Luftmenge belüftet, wobei die Zugabe zum Reaktor ebenfalls wieder in Abhängigkeit vom NH₃-Gehalt der Abluft gesteuert wurde. Die Reaktionstemperatur wurde durch die Luftzugabe auf einen Wert zwischen 30 und 37°, maximal jedoch auf 45°, gehalten. Der CO₂-Gehalt der Abluft schwankte bis 14 Vol.-%, und der NH3-Gehalt schwankte bis zu 70 ppm. Die Zuluft wurde auf etwa 90 % relative Luftfeuchtigkeit befeuchtet. Für den Start der Reaktion wurde auch der Reaktor II auf eine Temperatur von 35° C aufgeheizt, welche dann auf 30° C abgesenkt wurde. Das eingebrachte Substrat wies einen pH-Wert von 8,45 auf, am 15. Tag war der pH-Wert auf 8,15 gefallen, am 26. Tag dann auf 8,03 und am Ende des Abbaues betrug der pH 7,4.

Das abgebaute Produkt wies einen sehr guten pilzartigen Geruch (wie frischer Waldboden) auf, hatte keinerlei NH₃-Geruch und der pH-Wert war, wie angeführt, annähernd neutral.

## Patentansprüche

1. Verfahren zum kontrollierten und gesteuerten aeroben biologischen Abbau von organischen Abfällen, wobei das abzubauende Substrat, welches gegebenenfalls mit einer Mischung aus Bakterien und Pilzen beimpft wird, oben auf das bereits in mikrobiologischem Abbau befindliche Gut aufgegeben und das umgewandelte Gut unten abgezogen wird, und wobei für den Abbau ein sauerstoffhältiges Gas zugeführt wird, dadurch gekennzeichnet, daß in Abhängigkeit vom NH₃-Gehalt der Abluft und/oder vom NH₃-Gehalt, welcher über Meßsonden in dem im Abbau befindlichen Substratinneren gemessen wird, und in Abhängigkeit vom pH-Wert dieses Substrates dem sauerstoffhältigen Gas CO₂ zugesetzt wird, wobei bei solchen organischen Abfällen, die keinen oder nur wenig Stickstoff enthalten, diese vor oder während ihrer Aufgabe auf das in Abbau befindliche Gut mit organischen und/oder anorganischen Stickstoffverbindungen bzw. solche enthaltende Abfälle vermengt werden.

2. Verfahren nach Anspruch 1, dadurch gekennzeichnet, daß bei Ansteigen des NH₃-Gehaltes in der Abluft und/oder in dem im Abbau befindlichen Substrat der Anteil an CO₂ im zugeführten Gas erhöht wird.

3. Verfahren nach Anspruch 1 oder 2, dadurch gekennzeichnet, daß die Menge an aufzubringendem Frischsubstrat und der Aufgabezeitpunkt abhängig vom NH₃-Wert der Abluft gesteuert werden.

4. Verfahren nach einem der Ansprüche 1 bis 3, dadurch gekennzeichnet, daß dem Frischsubstrat bereits vor der Aufgabe auf das in Abbau befindliche Gut CO₂ und/oder ein CO₂-hältiges Medium zugesetzt wird.

5. Verfahren nach einem der Ansprüche 1 bis 4, dadurch gekennzeichnet, daß dem abzubauenden Substrat vor oder während seiner Aufgabe auf das in Abbau befindliche Gut zusätzliche Nährstoffe für die Mikroorganismen zugesetzt werden.

6. Verfahren nach Anspruch 5, dadurch gekennzeichnet, daß als Nährstoffe N, P, K, Mg, Ca und Si zugesetzt werden, und zwar vorzugsweise N 0,5 %, P 1,0 %, K 2,5 %, Mg 3 %, Ca 6 %, Si 43 %, wobei zusätzlich noch organisches Material (Knochenmehl 9 %) und inertes Trägermaterial 35 % der Nährstoffmischung zugesetzt werden.

7. Verfahren nach einem der Ansprüche 1 bis 6, dadurch gekennzeichnet, daß dem abzubauenden Substrat vor oder während seiner Aufgabe auf das in Abbau befindliche Gut den Abbau katalytisch unterstützende Substanzen zugesetzt werden.

8. Verfahren nach Anspruch 7, dadurch gekennzeichnet, daß die katalytisch wirkende Substanz aus SiO₂, Al₂O₃, Fe₂O₃, K₂O, CaO, Na₂O, MgO und Spurenelementen zusammengesetzt ist, und zwar vorzugsweise SiO₂ 50 %, Al₂O₃ 15 %, Fe₂O₃ 10 %, K₂O 3 %, CaO 5 %, Na₂O 5 % und MgO 4,5 %, wobei der Rest durch Spurenelemente ergänzt wird.

9. Verfahren nach einem der Ansprüche 1 bis 8, dadurch gekennzeichnet, daß die Temperatur des in Abbau befindlichen Gutes etwa auf 36 bis 40° C, maximal jedoch bis etwa 60° C, gehalten wird.

10. Verfahren nach Anspruch 9, dadurch gekennzeichnet, daß die Temperatur im im Abbau befindlichen Gut mittels des eingebrachten Gases in den vorgegebenen Grenzen gehalten wird.

11. Verfahren nach einem der Ansprüche 1 bis 10, dadurch gekennzeichnet, daß die Zugabe von frischem Substrat unabhängig von der Entnahme von abgebautem Substrat erfolgt.

12. Verfahren nach Anspruch 11, dadurch gekennzeichnet, daß die Abzugsmenge an abgebautem Gut in Abhängigkeit vom pH-Wert gesteuert wird.

13. Verfahren nach einem der vorhergehenden Ansprüche, dadurch gekennzeichnet, daß der pH-Wert des frisch aufgegebenen Gutes auf einem Wert unter pH 13 gehalten wird.

14. Verfahren nach Anspruch 12, dadurch gekennzeichnet, daß der pH-Wert des Austragsgutes zwischen pH 7 und pH 8,5 liegt.

15. Verfahren nach einem der vorhergehenden Ansprüche, dadurch gekennzeichnet, daß das sauerstoffhältige Gas im Gleichstrom oder im Gegenstrom zum abzubauenden Gut geführt wird.

16. Verfahren nach Anspruch 15, dadurch gekennzeichnet, daß das sauerstoffhältige Gas bei Bedarf zusätzlich über Lanzen direkt in das abzubauende Substrat eingetragen wird.

17. Verfahren nach einem der vorhergehenden Ansprüche, dadurch gekennzeichnet, daß die Abluft zwecks Ausnützung des enthaltenen CO₂ und des enthaltenen NH₃ rezirkuliert wird.

18. Verfahren nach Anspruch 17, dadurch gekennzeichnet, daß die Abluft vor ihrer Wiedereinleitung bei zu hohem NH₃-Gehalt ganz oder teilweise durch einen NH₃-Filter, z.B. eine Aufschlämmung von Bentonitmehl, geleitet wird.

19. Verfahren nach einem der vorhergehenden Ansprüche, dadurch gekennzeichnet, daß die Stickstoffverbindungen enthaltenden organischen Abfälle mit anderen organischen Abfällen, welche keine Stickstoffverbindungen enthalten, wie z.B. Altpapier, Stroh u.dgl., in Mischung eingesetzt werden.

20. Verfahren nach einem der vorhergehenden Ansprüche, dadurch gekennzeichnet, daß schwer entwässerbare Schlämme, z.B. Schlämme aus der Nahrungsmittelindustrie vor dem Abpressen zusätzlich mit Ca(OH)₂ vermengt werden.

## Claims

1. Process for the controlled and regulated aerobic biodegradation of organic waste materials, wherein the substrate to be degraded, which is optionally inoculated with a mixture of bacteria and fungi, is fed in at the top of the material already undergoing microbiological degradation and the converted material is drawn off below, and wherein an oxygen-containing gas is supplied for the degradation, characterised in that depending on the NH₃ content of the waste air and/or on the NH₃ content which is measured by measuring probes in the interior of the substrate undergoing degradation, and depending on the pH value of this substrate, CO₂ is added to the oxygen-containing gas, while in the case of such organic waste materials as contain no or only a little oxygen, these are mixed, prior to or during their being fed to the material undergoing degradation, with organic and/or inorganic oxygen compounds or with waste materials containing such compounds.

2. Process according to claim 1, characterised in that on an increase in the NH₃ content in the waste air and/or in the substrate undergoing degradation, the proportion of CO₂ in the introduced gas is increased.

3. Process according to claims 1 or 2, characterised in that the quantity of fresh substrate to be introduced and the time of the charge are regulated depending on the NH₃ value of the waste air.

4. Process according to one of claims 1 to 3, characterised in that CO₂ and/or a CO₂-containing medium is already added to the fresh substrate prior to its being fed to the material undergoing degradation.

5. Process according to one of claims 1 to 4, characterised in that additional nutrients for the microorganisms are added to the substrate to be degraded prior to or during its being fed to the material undergoing degradation.

6. Process according to claim 5, characterised in that the nutrients added are N, P, K, Mg, Ca and Si, namely preferably N 0.5%, P 1.0%, K 2.5%, Mg 3%, Ca 6%, Si 43%, with in addition further organic material (bone-meal 9%) and inert carrier 35% being added to the nutrient mixture.

7. Process according to one of claims 1 to 6, characterised in that catalytically promoting substances are added to the substrate to be degraded prior to or during its being fed to the material undergoing degradation.

8. Process according to claim 7, characterised in that the catalytically active substance is composed of SiO₂, Al₂O₃, Fe₂O₃, K₂O, CaO, Na₂O, MgO and trace elements, namely preferably SiO₂ 50%, Al₂O₃ 15%, Fe₂O₃ 10%, K₂O 3%, CaO 5%, Na₂O 5% and MgO 4.5%, with the remainder being made up by trace elements.

9. Process according to one of claims 1 to 8, characterised in that the temperature of the material undergoing degradation is maintained at approximately 36 to 40°C, but up to a maximum of approximately 60°C.

10. Process according to claim 9, characterised in that the temperature in the material undergoing degradation is maintained within the stated limits by means of the gas introduced.

11. Process according to one of claims 1 to 10, characterised in that the addition of fresh substrate is carried out independently of the removal of degraded substrate.

12. Process according to claim 11, characterised in that the quantity of degraded material withdrawn is regulated depending on the pH value.

13. Process according to any one of the preceding claims, characterised in that the pH value of the freshly charged material is maintained at a value of below pH 13.

14. Process according to claim 12, characterised in that the pH value of the discharged material is between pH 7 and pH 8.5.

15. Process according to any one of the preceding claims, characterised in that the oxygen-containing gas is supplied in cocurrent or countercurrent flow to the material to be degraded.

16. Process according to claim 15, characterised in that the oxygen-containing gas is introduced additionally as rehired through lances directly into the substrate to be degraded.

17. Process according to any one of the preceding claims, characterised in that the waste air is recycled for the purpose of utilising the contained CO₂ and the contained NH₃.

18. Process according to claim 17, characterised in that in the case of too high an NH₃ content, all or part of the waste air is led through an NH₃ filter, for example, a suspension of ground bentonite, prior to its being recycled.

19. Process according to any one of the preceding claims, characterised in that the organic waste materials which contain oxygen compounds are employed mixed with other organic waste materials which contain no oxygen compounds such as, for example, waste paper, straw and the like.

20. Process according to any one of the preceding claims, characterised in that sludge which cannot be drained easily, for example, sludge from the food processing industry, is additionally mixed with Ca(OH)₂ prior to pressing.

## Revendications

1. Procédé de contrôle et de commande de la décomposition biologique aérobie de déchets organiques, le substrat destiné à être décomposé, qui est, le cas échéant, inoculé d'un mélange de bactéries et de champignons, étant déchargé sur le dessus des matières se trouvant déjà en état de décomposition microbiologique et les matières transformées étant retirées en bas et un gaz contenant de l'oxygène étant introduit pour la décomposition, caractérisé en ce que, en fonction de la teneur en NH₃ de l'air d'échappement et/ou de la teneur en NH₃ qui est mesurée à l'intérieur du substrat en état de décomposition, par l'intermédiaire de sondes de mesure, et en fonction du degré de pH de ce susbtrat, du CO₂ est ajouté au gaz contenant de l'oxygène, les déchets organiques qui ne contiennent pas ou seulement peu d'azote étant mélangés, avant ou pendant leur déchargement sur les matières se trouvant en état de décomposition, avec des composés azotés organiques et/ou inorganiques ou des déchets contenant ces derniers.

2. Procédé selon la revendication 1, caractérisé en ce que, lorsqu'augmente la teneur en NH₃ de l'air d'échappement et/ou la teneur en NH₃ qui est mesurée à l'intérieur du substrat en état de décomposition, la teneur en CO₂ dans le gaz alimenté est augmentée.

3. Procédé selon la revendication 1 ou 2, caractérisé en ce que la quantité de susbtrat frais à décharger et le moment de déchargement sont commandés en fonction de la teneur en NH₃ de l'air d'échappement.

4. Procédé selon l'une des revendications 1 à 3, caractérisé en ce que du CO₂ et/ou un milieu contenant du CO₂ est ajouté au substrat frais, avant même que celui-ci ne soit déchargé sur les matières se trouvant en état de décomposition.

5. Procédé selon l'une des revendications 1 à 4, caractérisé en ce que des susbtances nutritives supplémentaires pour les micro-organismes sont ajoutées au substrat destiné à être décomposé, avant ou pendant son déchargement sur les matières se trouvant en état de décomposition.

6. Procédé selon la revendication 5, caractérisé en ce que les susbtances nutritives ajoutées sont N, P, K, Mg, Ca et Si et, de préférence, 0,5 % de N, 1,0 % de P, 2,5 % de K, 3 % de Mg, 6 % de Ca, 43 % de Si, d'autres matières organiques (9 % d'engrais d'os) et 35 % de support inerte étant encore ajoutés au mélange de substances nutritives.

7. Procédé selon l'une des revendications 1 à 6, caractérisé en ce que des susbtances favorisant la décomposition catalytique sont ajoutées au substrat destiné à être décomposé, avant ou pendant son déchargement sur les matières se trouvant en état de décomposition.

8. Procédé selon la revendication 7, caractérisé en ce que la susbtance agissant de façon catalytique est composée de SiO₂, Al₂O₃, Fe₂O₃, K₂O, CaO, Na₂O, MgO et d'oligo-éléments et, de préférence, de 50 % de SiO₂, de 15 % de Al₂O₃, de 10 % de Fe₂O₃ , de 3 % de K₂O, de 5 % de CaO, de 5 % de Na₂O et de 4,5 % de MgO, le reste étant complété par des oligo-éléments.

9. Procédé selon l'une des revendications 1 à 8, caractérisé en ce que la température des matières se trouvant en état de décomposition est maintenue approximativement entre 36 et 40°C, mais se monte au maximum à environ 60°C.

10. Procédé selon la revendication 9, caractérisé en ce que la température, à l'intérieur des matières se trouvant en état de décomposition, est maintenue dans les limites prescrites au moyen du gaz insufflé.

11. Procédé selon l'une des revendications 1 à 10, caractérisé en ce que le déchargement de susbtrat frais est indépendant du retrait de substrat décomposé.

12. Procédé selon la revendication 11, caractérisé en ce que la quantité de matières décomposées qui est retirée est commandée en fonction de la valeur de pH.

13. Procédé selon l'une des revendications précédentes, caractérisé en ce que la valeur de pH des matières nouvellement déchargées est maintenue à une valeur inférieure à un pH de 13.

14. Procédé selon la revendication 12, caractérisé en ce que la valeur de pH des rejets est située entre pH 7 et pH 8,5.

15. Procédé selon l'une des revendications précédentes, caractérisé en ce que le gaz contenant de l'oxygène est alimenté en courant parallèle ou à contrecourant des matières destinées à être décomposées.

16. Procédé selon la revendication 15, caractérisé en ce qu'en cas de besoin le gaz contenant de l'oxygène est introduit de façon supplémentaire directement à l'intérieur du substrat destiné à être décomposé, au moyen de lances.

17. Procédé selon l'une des revendications précédentes, caractérisé en ce que l'air d'échappement est amené à recirculer afin d'utiliser le CO₂ et le NH₃ qui y sont présents.

18. Procédé selon la revendication 17, caractérisé en ce que l'air d'échappement, avant sa réintroduction, lorsque sa teneur en NH₃ est trop élevée, est guidé totalement ou partiellement à travers un filtre à NH₃, par exemple une suspension de poudre de smectite.

19. Procédé selon l'une des revendications précédentes, caractérisé en ce que les déchets organiques contenant des composés azotés sont mélangés à d'autres déchets organiques, qui ne contiennent pas de composés azotés, comme par exemple des vieux papiers, de la paille et similaires.

20. Procédé selon l'une des revendications précédentes, caractérisé en ce que des boues fortement déshydratées, par exemple des boues provenant de l'industrie alimentaire sont malaxées, avant l'extraction par pression, avec du Ca(OH)₂.
